# NEW EUROPEAN PATENT SPECIFICATION

(11) **EP 1 625 027 B2**
(45) Date of publication and mention of the opposition decision: **29.06.2016**
(45) Mention of the grant of the patent: 30.09.2009
(21) Application number: 04731673.2
(22) Date of filing: 07.05.2004
(51) Int. Cl.: B60B 15/24

(54) **WHEEL STUDS**
SPIKES FÜR EIN RAD
GOUJONS DE ROUE

(30) Priority: 09.05.2003 GB 0310749
(43) Date of publication of application: 15.02.2006
(73) Proprietor: Hedgehog Golf Company Limited, Newhaven East Sussex BN9 9LL (GB)
(72) Inventor: Hauser, Frank, Hassocks, West Sussex BN6 8JG (GB); Lantsbury, Denis, Hassocks, West Sussex BN6 8TQ (GB)
(74) Representative: Sayer, Robert David
(86) International application number: PCT/GB2004/002003
(87) International publication number: WO 2004/098909

(56) References cited:
- DE-C- 964 931
- DE-U- 29 815 209
- FR-A- 502 138
- GB-A- 2 015 945
- GB-A- 191 213 280
- US-A- 2 400 428
- US-A- 4 802 547

## Description

This invention relates to a vehicle wheel for a golf trolley, cart or buggy, a set of studs or a base for use with such a vehiclewheel, and a golf trolley, cart orbuggy provided with such apparatus.

Golf trolleys commonly comprise a substantially triangular chassis provided with wheels at the lower corners, and a support for a bag of golf clubs. Such trolleys are conventionally provided with a handle and are pushed or pulled along as the player traverses a course.

On many golf courses the use of trolleys may be banned during bad weather or damp conditions. This is because the wheels of the trolley can damage the surface of the course and leave muddy tracks.

This problem is encountered with any wheeled vehicle used on a golf course, for example a golf buggy for transporting the players.

FR 502138, in the name of JAKOBSEN, discloses a vehicle wheel for an agricultural vehicle, which is provided with a plurality of studs which have a rounded end point and a rounded connection to the wheel rim. The studs are shaped and dimensioned such that they penetrate soft ground to provide grip and prevent slippage, which Is important for heavy agricultural vehicles like tractors which traverse muddy fields. The rounded shaping of the studs is employed to prevent mud or earth from sticking to the wheel. This solution is not appropriate for a golf course because it is undesirable to penetrate the turf of the course at all. The studs are provided on separate rigid plates which are secured to the vehicle wheel. As such the studs are time consuming and awkward to fit to the wheel. The plates also add weight.

DE 298152090, in the name of SALVAGNO, discloses a golf trolley comprising wheels provided with spikes. Again, this is undesirable as such spikes penetrate the turf of a golf course and cause damage.

The present Invention is intended to solve or at least alleviate these and other problems.

Therefore, according to a first aspect of the present invention, a vehicle wheel is provided with a plurality of studs which extend radially from a rim of the wheel, in which at least some of the studs are parabolic in cross-section in a plane normal to the axis of rotation of the wheel and generally parallel to the rolling direction of the wheel, characterised in that the studs are provided on an elongate base comprising a strip of resilient material which is adapted to be held in position against the rim of the wheel, and in which the vehicle wheel is to be used with a golf trolley, buggy or cart.

In a preferred embodiment, all studs are parabolic in cross-section.

This parabolic shape enables the studs to ride over the surface during rotation of the wheel, substantially, without removing material from the surface.

"Riding over" the surface may include penetration of the surface or may simply cause an impression on the surface.

Each stud is preferably paraboloid or substantially paraboloid in shape.

In a preferred embodiment, the vehicle is a golf trolley adapted to carry a bag of golf clubs. In an alternative embodiment, the vehicle is a golf buggy adapted to carry golfers and their clubs.

The strip of resilient material can be a rubber-like compound. The strip may comprise a continuous loop or may comprise a length having attachment means at each end; in this way, the base can be wrapped around the wheel rim and held in place by the attachment means. The attachment means may comprise any suitable mechanism, for example press studs or two opposing surfaces of a hook and loop fastener. Other known attachment mechanisms can, however, be employed.

The studs and the base may be constructed from a single piece of resilient material. In a preferred construction, the base and studs are constructed from a PVC compound of Shore A74 hardness or similar material. With this arrangement, the single piece can be Injection moulded during manufacture.

In an alternative embodiment, the studs are individually constructed and attached to the base. In this embodiment, the studs may comprise a base portion and a body portion. The base portion of each stud may be provided with a male portion of an attachment means, and the body portion may be provided with a female portion of the attachment means. The base portion may be disposed adjacent the Inner surface of the base, with the male portion of the attachment means protruding through an aperture provided in the base. The body portion may be attached to the base portion via the attachment means which protrudes through the base portion.

In a preferred embodiment, the base has substantially the same dimensions as those of the outer peripheral rim surface of the wheel. The base may be provided with approximately 34 studs, which are formed in two offset rows of 17 studs, substantially parallel to the side of the base. Other numbers of studs may, however, be provided.

Preferably, the base is adapted to be fitted to a golf trolley wheel, and may be between substantially 70mm and 125mm in width, and preferably 70mm to 75mm in width. The rows of studs are typically substantially 30mm to 50mm apart, and preferably 36mm apart, with substantially 35mm to 80mm, and preferably 41 mm between each stud in a row. The rows can be offset so that the studs in one row are substantially half-way along the gap between the studs in the adjacent row. Other arrangements can, however, be adopted.

In one construction, the ends of the base are angled at approximately 45 degrees to the sides. This is to enable the base to be secured in position without the attachment means interfering with the position of any of the studs.

The studs may be between substantially 20mm and 45mm and preferably 23mm to 30mm in length, and 15mm to 30mm wide at their base. Preferably, the studs are substantially paraboloid in shape.

According to a second aspect of the present invention a set of studs for used on a vehicle wheel according to Claim 1 are provided, each stud being characterised in that it is paraboloid or substantially paraboloid in shape.

According to a third aspect of the present invention a base used on a vehicle wheel according to Claim 1 is provided, in which the base comprises a plurality of studs upstanding from one surface of the base, in which when the base is mounted on the rim of a vehicle wheel the studs are parabolic in cross-section in a plane normal to the axis of the wheel and parallel to its rolling direction, and in which the base is elongate and comprises a strip of resilient material adapted to be held in position against the rim of the wheel.

According to a fourth aspect of the present invention a golf trolley, buggy or cart is provided with wheels according to Claim 1, a set of studs according to Claim 23, or a base according to Claim 24.

The invention will now be described by way of example only with reference to the accompanying diagrammatic drawings, in which:
Figure 1 is a plan view from above of apparatus according to the present Invention;
Figure 2 Is a side view of the apparatus as shown in Figure 1;
Figure 3 is a side view of the apparatus as shown in Figure 1 in use;
Figure 4 is a cross-sectional side view of a part of the apparatus as shown in Figure 1;
Figure 5 is a side view of a further embodiment according to the present invention;
Figure 6 is a side view of the apparatus of Figure 5 in use; and
Figure 7 is a side perspective view of the apparatus of Figures 5 and 6.

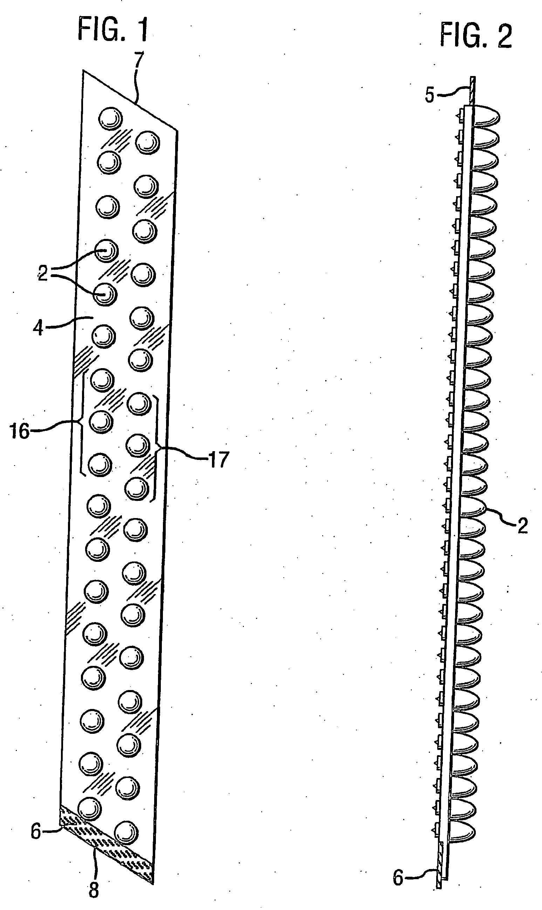

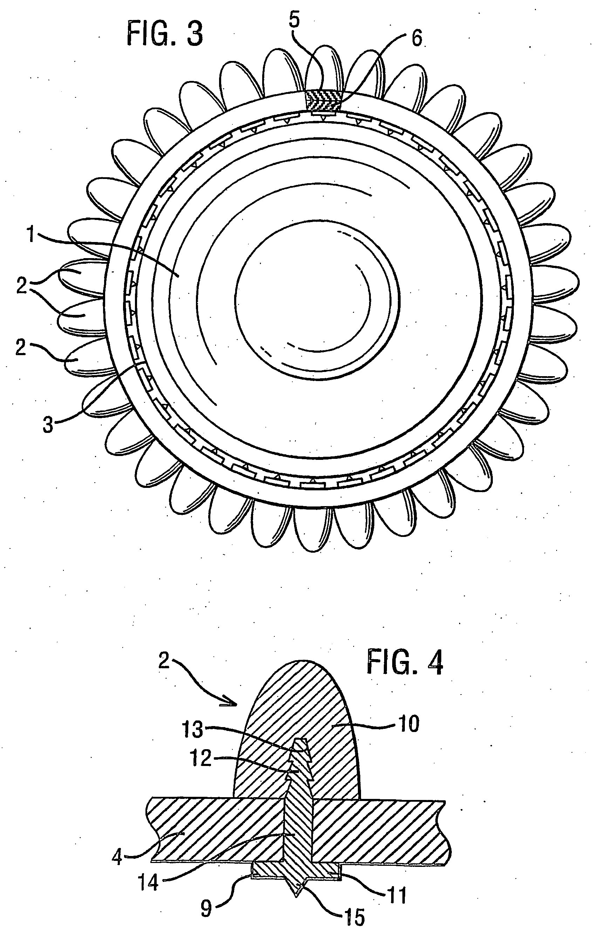

As shown in Figures 1 to 4, a golf trolley wheel 1 is provided with a plurality of studs 2 which extend radially from a rim 3 of the wheel 1 and are adapted to ride overturf over which the wheel is rotated in use. In a plane normal to the rotational axis of the wheel and parallel to the rolling direction of the wheel each stud is parabolic in cross section (as shown in Figure 4). When the wheel is rotated in use, the studs exit the turf substantially without removing material from the turf.

As shown in Figures 1 and 2, the studs 2 are mounted on an elongate base 4, which is constructed from a resilient material. The material of the base may comprise a rubber or rubber-like compound. The base is provided with the two opposing surfaces of a hook and loop fastener 5 and 6 at either end. The base is further provided with angled end edges 7 and 8. With this arrangement, the surfaces 7 and 8 can be attached together, without a gap being present between the studs 2. In use, the base 4 is wrapped around the wheel rim 3, as shown In Figure 3.

As shown best In Figure 4, the studs comprise a base portion 9 and a body portion 10. The body portion is paraboloid in shape. The base portion comprises a collar 11 and a male portion 12 of a connection mechanism. The body portion 10 is provided with a female portion 13 of the connection mechanism. The base portion 9 is disposed on the inner surface of the base 4, with each male portion 12 extending through an aperture 14 provided in the base 4. The body portion is disposed on the outer surface of the base 4, and the stud 2 is held in place by means of the connection mechanism being forced together. The base portion 9 is further provided with an extension 15, which is adapted to purchase the wheel rim 3, as shown in Figure 3, to help keep the base 4 in position during use.

In an alternative embodiment, the base 4 comprises a continuous loop with the studs projecting upwardly from one surface of the base 4.

The base 4 Is substantially 70mm to 125mm in width, and Is provided with 34 studs 2, which are arranged into two rows 16 and 17. The rows 16 and 17 are substantially 36mm apart, with substantially 41 mm between each stud 2. The rows 16, 17 are offset so that the studs 2 in one row are substantially half-way along the gap between the studs 2 in the adjacent row. The body portions 10 of the studs 2 are substantially 23mm in length, and 20mm wide at their base.

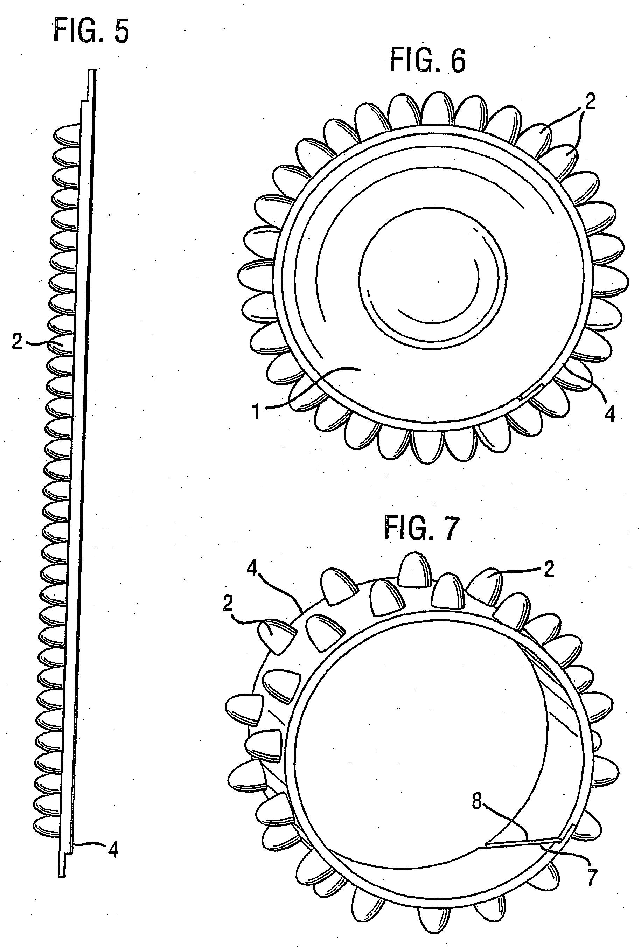

In an alternative embodiment, shown in Figures 5 to 7, the base 4 and studs 2 are integrally formed from a single length or loop of injection moulded PVC of Shore A74 hardness or similar. The PVC may alternatively be formed by rotational moulding. Alternatively still the studs 2 may be adhered to the base 4 using suitable adhesive.

In this embodiment, a mechanical connection mechanism between the stud 2 and the base 4 is not required.

As can be seen best in Figure 7, the surfaces 7 and 8 of the base 4 are attached together, for example by ultrasonic welding to form a continuous loop with the studs 2 projecting from one surface of the base 4.

At least one plastic injection moulded clip (not shown) is used to retain the base 4 against the rim of a wheel. The clip is designed to extend laterally across the base 4 to clip it to the rim. The base 4 may be provided with indents (not shown) to receive part of the surface of the or each clip to aid retention of the base 4 to the wheel rim.

In an alternative unillustrated embodiment, the base is formed as a continuous loop which is fitted directly over the wheel rim.

The described embodiments enable a golf trolley, buggy or cart to be used selectively during inclement or normal conditions without damaging the turf of the course. The studs hold the wheel rim away from the turf. The studs may penetrate the turf.

It will be appreciated that the foregoing is merely exemplary of apparatus in accordance with the invention and that modifications can readily be made thereto without departing from the scope of the invention as set out in the appended claims.

## Claims

1. A vehicle wheel (1) provided with a plurality of studs (2) which extend radially from a rim (3) of the wheel (1), in which at least some of the studs (2) are parabolic or substantially parabolic in cross-section in a plane normal to the axis of the rotation of the wheel (1) and generally parallel to the rolling direction of the wheel (1), **characterised in that** the studs (2) are provided on an elongate base (4) comprising a strip of resilient material which is adapted to be held in position against the rim (3) of the wheel (1), in which the resilient strip is provided with attachment means (5, 6) adapted to attach one end (7) of the base (4) to the other (8) around the wheel (1), and in which the vehicle wheel (1) is used with a golf trolley, buggy, or kart.

2. A vehicle wheel (1) as claimed in claim 1 wherein all the studs (2) are parabolic or substantially parabolic.

3. A vehicle wheel (1) as claimed in claim 1 or claim 2 in which each stud (2) is paraboloid or substantially paraboloid in shape.

4. A vehicle wheel (1) as claimed in one of the preceding claims in which the studs (2) are arranged in two rows (16, 17) which extend around the circumference of the wheel (1) and which are spaced apart in an axial direction of the wheel (1).

5. A vehicle wheel (1) as claimed in claim 4 in which the two rows (16, 17) are offset so that the studs (2) in one row (16 or 17) are substantially half-way along the gap between the studs (2) in the adjacent row (16 or 17).

6. A vehicle wheel (1) as claimed in any of the preceding claims in which the length of each stud (2) is between 20mm and 45mm in length.

7. A vehicle wheel (1) as claimed in claim 6 in which the length of each stud (2) is between 23mm and 30mm in length.

8. A vehicle wheel (1) as claimed in claim 7 in which the width of each stud (2) at the base is between 15mm and 30mm.

9. A vehicle wheel (1) as claimed in claim 8 in which the width of each stud (2) at the base is between 18mm and 25mm.

10. A vehicle wheel (1) as claimed in any one of claims 4 to 9 in which the two rows (16, 17) of studs (2) are spaced apart in the axial direction of the wheel (1) by substantially 30mm to 50mm.

11. A vehicle wheel (1) as claimed in claim 10 in which the two rows (16, 17) of studs (2) are spaced apart in the axial direction of the wheel by substantially 36mm.

12. A vehicle wheel (1) as claimed in any one of claims 4 to 11 in which the studs (2) in each row (16, 17) are spaced apart by substantially 35mm to 80mm.

13. A vehicle wheel (1) as claimed in claim 12 in which the studs (2) in each row (16, 17) are spaced apart by substantially 41mrn.

14. A vehicle wheel (1) as claimed in any of the preceding claims in which the studs (2) are removable from the wheel (1).

15. A vehicle wheel (1) as claimed in claim 1 in which the attachment means (5, 6) comprise the two opposing surfaces (5, 6) of a hook and loop fastener.

16. A vehicle wheel (1) as claimed in claim 15 in which the ends of the base (4) are angled at approximately 45 degrees to the sides.

17. A vehicle wheel (1) as claimed in claim 16 in which the base (4) and the studs (2) are formed from a single piece of resilient material.

18. A vehicle wheel (1) as claimed in claim 16 in which each stud (2) comprises a base portion (9) and a body portion (10), in which the base portion (9) is provided with a male portion (12) of an attachment means and the body portion (10) is provided with a female portion (13) of the attachment means, and in which the base portion (9) and the body portion (10) can be attached together with the male portion (12) of the attachment means protruding through an aperture (14) provided in the base (4).

19. A vehicle wheel (1) as claimed in claim 18 in which the base (4) is substantially the same dimensions as the outer peripheral rim surface (3) of the wheel (1).

20. A vehicle wheel (1) as claimed in claim 14 in which the base (4) is between substantially 70mm and 125mm in width.

21. A set of studs (2) used on a vehicle wheel according to claim 1, each stud (2) being **characterised in that** it is paraboloid or substantially paraboloid in shape.

22. A base (4) used on a vehicle wheel according to claim 1, in which the base (4) comprises a plurality of studs (2) upstanding from one surface of the base (4), in which when the base (4) is mounted on the rim (3) of the vehicle wheel (1), the studs (2) are parabolic in cross-section in a plane normal to the axis of the wheel (1) and parallel to its rolling direction, and in which the base is elongate and comprises a strip of resilient material adapted to be held in position against the rim (3) of the wheel (1).

23. A golf trolley, buggy or cart provided with wheels (1) according to claim 1, a set of studs (2) according to claim 21, or a base (4) according to claim 22.

## Patentansprüche

1. Ein Fahrzeugrad (1) mit einer Vielzahl von Bolzen (2), die radial von einer Felge (3) des Rades aus (1) verlaufen, in dem mindestens einige der Bolzen (2) parabolisch oder im Wesentlichen parabolisch sind und im Querschnitt in einer für die Drehung des Rades (1) normalen Ebene und, ganz allgemein, parallel zur Rollrichtung des Rades (1) verlaufen, charakterisiert dadurch, dass sich diese Bolzen (2), auf einem länglichen Sockel befinden (4). Dazu gehören: ein Streifen aus elastischem Material, der für eine Position gegen die Felge (3) des Rades (1) ausgelegt ist, in dem der belastbare Streifen mit Befestigungsmitteln (5, 6) ausgestattet ist, um ein Ende (7) des Sockels (4) am anderen (6) um das Rad (1) zu befestigen, und in dem das Fahrzeugrad (1) bei einem Golf Trolley, Buggy oder Einkaufswagen verwendet wird.

2. Ein Fahrzeugrad (1), wie in Claim 1 beantragt, bei dem alle Bolzen (2) parabolisch oder im Wesentlichen parabolisch sind.

3. Ein Fahrzeugrad (1), wie in Claim 1 oder Claim 2 beantragt, bei dem die Form jedes Bolzens (2) paraboloid oder im Wesentlichen paraboloid ist.

4. Ein Fahrzeugrad (1), wie in einem der vorhergehenden Claims beantragt, bei dem die Bolzen (2) in zwei Reihen angeordnet sind (16, 17), die um den Umfang des Rades (1) verlaufen und die in axialer Richtung zum Rad (1) im Abstand voneinander angeordnet sind.

5. Ein Fahrzeugrad (1), wie in Claim 4 beantragt, bei dem die beiden Reihen (16, 17) versetzt angeordnet sind, so dass die Bolzen (2) in einer Reihe (16 oder 17) im Wesentlichen auf halbem Weg entlang der Lücke zwischen den Bolzen (2) in der benachbarten Reihe (16 oder 17) angeordnet sind.

6. Ein Fahrzeugrad (1), wie in einem der vorhergehenden Claims beantragt, bei dem jeder Bolzen (2) eine Länge zwischen 20 mm und 45 mm aufweist.

7. Ein Fahrzeugrad (1), wie in Claim 6 beantragt, bei dem jeder Bolzen (2) eine Länge zwischen 23 mm und 30 mm aufweist

8. Ein Fahrzeugrad (1), wie in Claim 7 beantragt, bei dem jeder Bolzen (2) auf dem Sockel eine Breite zwischen 15mm und 30mm aufweist.

9. Ein Fahrzeugrad (1), wie in Claim 8 beantragt, bei dem jeder Bolzen (2) auf dem Sockel eine Breite zwischen 18 mm und 25 mm aufweist.

10. Ein Fahrzeugrad (1), wie in einem der Claims 4 bis 9 beantragt, bei dem die beiden Reihen (16, 17) der Bolzen (2) im Wesentlichen in einem Abstand in axialer Richtung zum Rad (1) von 30 mm bis 50 mm angeordnet sind.

11. Ein Fahrzeugrad (1), wie in einem der Claims 10 beantragt, bei dem die beiden Reihen (16, 17) der Bolzen (2) im Wesentlichen in einem Abstand in axialer Richtung zum Rad von 36 mm angeordnet sind.

12. Ein Fahrzeugrad (1), wie in einem der Claims 4 bis 11 beantragt, bei der die Bolzen (2) in jeder Reihe (16, 17) im Wesentlichen einen Abstand von 35 mm bis 80 mm voneinander haben.

13. Ein Fahrzeugrad (1), wie in Claim 12 beantragt, bei dem die Bolzen (2) in jeder Reihe (16,17) im Wesentlichen einen Abstand von 41mm voneinander haben.

14. Ein Fahrzeugrad (1), wie in einem der vorhergehenden Claims beantragt, bei dem die Bolzen (2) aus dem Rad entfernbar sind (1).

15. Ein Fahrzeugrad (1), wie in Claim 1 beantragt, bei dem die beiden gegenüberliegenden Flächen (5, 6) eines Klettverschlusses zu den Befestigungsmitteln (5, 6) gehören.

16. Ein Fahrzeugrad (1), wie in Claim 15 beantragt, bei dem die Enden des Sockels (4) zu den Seiten in einem Winkel von 45 Grad angewinkelt sind.

17. Ein Fahrzeugrad (1), wie in Claim 16 beantragt, bei dem der Sockel (4) und die Bolzen (2) aus einem einzigen Stück elastischem Material geformt sind.

18. Ein Fahrzeugrad (1), wie in Claim 16 beantragt, bei dem jeder Bolzen (2) besteht aus: einem Sockel-(9) und einen Körperabschnitt (10) und wobei der Sockelabschnitt (9) versehen ist mit einem männlichen Abschnitt (12) einer Befestigungsvorrichtung und der Körperabschnitt (10) mit einem weiblichen Abschnitt (13) der Befestigungsvorrichtung, und bei dem der Sockelabschnitt (9) und der Körperabschnitt (10) zusammen mit dem männlichen Abschnitt (12) der Befestigungsvorrichtung befestigt werden, die durch eine Öffnung (14) im Sockel (4) hervorragen.

19. Ein Fahrzeugrad (1), wie in Claim 18 beantragt, bei dem der Sockel (4) im Wesentlichen die gleichen Abmessungen wie die äußere periphere Felgenfläche (3) des Rades (1) hat.

20. Ein Fahrzeugrad (1), wie in Claim14 beantragt, bei dem der Sockel (4) im Wesentlichen eine Breite zwischen 70 mm und 125 mm aufweist.

21. Eine Bolzenreihe (2) in einem Fahrzeugrad, gemäß Claim 1, wobei die Form jedes Bolzens (2) als paraboloid oder im Wesentlichen paraboloid charakterisiert wird.

22. Ein Sockel (4), der auf einem Rad verwendet wird, gemäß Claim 1, in dem zum Sockel gehören: eine Vielzahl von Bolzen (2), aus einer Oberfläche des Sockels (4) aufrecht herausragend, und in dem, falls der Sockel (4) auf der Felge (3) montiert ist, die Bolzen (2) im Querschnitt parabolisch sind, in normaler Ebene zur Achse des Rades (1) und parallel zur Rollrichtung und bei dem der Sockel verlängert ist und über einen Streifen aus elastischem Material verfügt, der für eine Position gegen die Felge (3) des Rades (1) ausgelegt ist.

23. Ein Golf-Trolley, Buggy oder Einkaufswagen mit Rädern (1) gemäß Claim 1, ein Satz Bolzen (2) wie in Satz 21, oder einem Sockel (4) gemäß Claim 22.

## Revendications

1. Une roue de véhicule (1) munie de plusieurs goujons (2) qui s'étendent radialement depuis un bord (3) de la roue (1), dans laquelle au moins certains des goujons (2) sont paraboliques ou sensiblement paraboliques en coupe transversale, dans un plan perpendiculaire à l'axe de rotation de la roue (1) et généralement parallèles au sens de roulement de la roue (1), **caractérisée en ce que** les goujons (2) sont prévus sur une base allongée (4) comprenant une bande d'un matériau élastique adapté pour être maintenu en position contre le bord (3) de la roue (1), dans laquelle la bande élastique est équipée de moyens de fixation (5, 6) adaptés pour fixer une extrémité (7) de la base (4) à l'autre (8) autour de la roue (1), et dans laquelle la roue du véhicule (1) est utilisée avec un chariot de golf, un buggy ou un chariot.

2. Une roue de véhicule (1) selon la revendication 1, dans laquelle tous les goujons (2) sont paraboliques ou sensiblement paraboliques.

3. Une roue de véhicule (1) selon la revendication 1 ou la revendication 2, dans laquelle chaque goujon (2) est de forme parabolique ou sensiblement parabolique.

4. Une roue de véhicule (1) selon l'une quelconque des revendications précédentes, dans laquelle les goujons (2) sont disposés en deux rangées (16, 17) qui s'étendent autour de la circonférence de la roue (1) et qui sont espacés dans un sens axial de la roue (1).

5. Une roue de véhicule (1) selon la revendication 4, dans laquelle tes deux rangées (16, 17) sont décalées de sorte que les goujons (2) dans une rangée (16 ou 17) soient sensiblement à mi-chemin le long de l'espace entre les goujons (2) dans la rangée adjacente (16 ou 17).

6. Une roue de véhicule (1) selon l'une quelconque des revendications précédentes, dans laquelle la longueur de chaque goujon (2) est comprise entre 20 mm et 45 mm.

7. Une roue de véhicule (1) selon la revendication 6, dans laquelle la longueur de chaque goujon (2) est comprise entre 23 mm et 30 mm.

8. Une roue de véhicule (1) selon la revendication 7, dans laquelle la largeur de chaque goujon (2) à la base est comprise entre 15 mm et 30 mm.

9. Une roue de véhicule (1) selon la revendication 8, dans laquelle la largeur de chaque goujon (2) à la base est comprise entre 18 mm et 25 mm.

10. Une roue de véhicule (1) selon l'une quelconque des revendications 4 à 9, dans laquelle les deux rangées (16,17) de goujons (2) sont espacées dans le sens axial de la roue (1) de sensiblement 30 mm à 50 mm.

11. Une roue de véhicule (1) selon la revendication 10, dans laquelle les deux rangées (16, 17) de goujons (2) sont espacées dans le sens axial de la roue de sensiblement 36 mm.

12. Une roue de véhicule (1) selon l'une quelconque des revendications 4 à 11, dans laquelle les goujons (2) de chaque rangée (16,17) sont espacés de sensiblement 35 mm à 80 mm.

13. Une roue de véhicule (1) selon la revendication 12, dans laquelle les goujons (2) de chaque rangée (16,17) sont espacés de sensiblement 41 mm.

14. Une roue de véhicule (1) selon l'une quelconque des revendications précédentes, dans laquelle les goujons (2) sont amovibles depuis la roue (1).

15. Une roue de véhiculé (1) selon la revendication 1, dans laquelle les moyens de fixation (5, 6) comprennent les deux surfaces opposées (5. 6) d'une bande auto-agrippante.

16. Une roue de véhicule (1) selon la revendication 15, dans laquelle les extrémités de la base (4) forment un angle d'environ 45 degrés par rapport aux côtés.

17. Une roue de véhicule (1) selon la revendication 16, dans laquelle la base (4) et les goujons (2) sont formés d'une seule pièce de matériau élastique.

18. Une roue de véhicule (1) selon la revendication 16, dans laquelle chaque goujon (2) comprend une partie de base (9) et une partie de corps (10), où la partie de base (9) est pourvue d'une partie mâle (12) d'un moyen de fixation et la partie de corps (10) est pourvue d'une partie femelle (13) du moyen de fixation, et où la partie de base (9) et la partie de corps (10) peuvent être fixées ensemble à la partie mâle (12) des moyens de fixation faisant saillie à travers une ouverture (14) prévue dans la base (4).

19. Une roue de véhicule (1) selon la revendication 18, dans laquelle la base (4) est de sensiblement les mêmes dimensions que la surface périphérique extérieure de la jante (3) de la roue (1).

20. Une roue de véhicule (1) selon la revendication 14, dans laquelle la largeur de la base (4) est comprise entre sensiblement 70 mm et 125 mm.

21. Un ensemble de goujons (2) utilisés sur une roue de véhicule selon la revendication 1, chaque goujon (2) étant **caractérisé en ce qu'**il est de forme parabolique ou sensiblement parabolique.

22. Une base (4) utilisée sur une roue de véhicule selon la revendication 1, dans laquelle la base (4) comprend plusieurs goujons (2) se dressant depuis une surface de la base (4), dans laquelle, lorsque la base (4) est montée sur la jante (3) de la roue du véhicule (1), les goujons (2) sont paraboliques en coupe transversale dans un plan normal à l'axe de la roue (1) et parallèles à son sens de roulement, et dans laquelle la base est allongée et comprend une bande de matériau élastique adaptée pour être maintenue en position contre la jante (3) de la roue (1).

23. Un chariot de golf, buggy ou chariot muni de roues (1) selon la revendication 1, un ensemble de goujons (2) selon la revendication 21 ou une base (4) selon la revendication 22.
